# EUROPÄISCHE PATENTANMELDUNG

(11) **EP 2 026 048 A1**
(43) Veröffentlichungstag der Anmeldung: **18.02.2009**
(21) Anmeldenummer: 08104928.0
(22) Anmeldetag: 31.07.2008
(51) Int. Cl.: G01G 19/02

(54) **Verfahren und Vorrichtung zur Lastbestimmung eines in Fahrt befindlichen Fahrzeuges**

(30) Priorität: 06.08.2007 DE 102007036991
(71) Anmelder: Siemens Aktiengesellschaft, 80333 München (DE)
(72) Erfinder: Althen, Sebastian, 81543, München (DE); Layer, Tobias, 82131, Gauting (DE)

(57) **Zusammenfassung**

Die Erfindung betrifft ein Verfahren zur Bestimmung einer Fahrzeuglast eines in Fahrt befindlichen Fahrzeuges (F), insbesondere einer Rad-, Achs- und/oder Gesamtlast des Fahrzeuges (F), wobei eine von wenigstens einem Rad (R) des fahrenden Fahrzeugs (F) auf die Fahrbahn (S) ausgeübte Kraft (f_{dyn}) gemessen wird, und wobei aus der wenigstens einen dynamisch gemessenen Kraft (f_{dyn}) eine statische Fahrzeuglast ermittelt wird. Indem ein Schwingungszustand des in Fahrt befindlichen Fahrzeuges (F) zum Zeitpunkt der wenigstens einen Kraftmessung ermittelt wird, indem aus dem Schwingungszustand ein schwingungsbedingter Kraftanteil (f_{ω}) der dynamischen gemessenen Kraft (f_{dyn}) berechnet wird, indem aus der dynamisch gemessenen Kraft (f_{dyn}) und dem schwingungsbedingten Kraftanteil (f_{ω}) ein statischer Kraftanteil (fₛₜₐ) der dynamisch gemessenen Kraft (f_{dyn}) berechnet wird, und indem aus dem wenigstens einen statischen Kraftanteil (fₛₜₐ) die Fahrzeuglast ermittelt wird, können Lastbestimmungen von in Bewegung befindlichen Fahrzeugen (F) mit einer höheren Genauigkeit durchgeführt werden. Die Erfindung betrifft ferner eine Vorrichtung (10) zur Durchführung des Verfahrens.

## Beschreibung

Die Erfindung betrifft ein Verfahren zur Lastbestimmung eines in Fahrt befindlichen Fahrzeuges nach dem Oberbegriff des Patentanspruches 1 sowie auf eine Vorrichtung zur Durchführung des Verfahrens nach dem Patentanspruch 10.

Zur Gewichtsbestimmung von Fahrzeugen sind Wägestationen bekannt, die durch ein zu wägendes Fahrzeug extra anzufahren sind, wobei das Fahrzeug zum Wägen anhalten muss. Solche Wägestationen sind beispielsweise an Zu- bzw. Ausfahrten von Werksgeländen angeordnet, um das Ladegewicht von Lastkraftwagen bei Ein- und Ausfahrt zu bestimmen. Des Weiteren kommen Wägestationen bei Verkehrskontrollen zum Einsatz, beispielsweise bei der Überprüfung von Lastkraftwagen auf ihren ordnungsgemäßen Ladezustand.

Wägestationen haben jedoch den Nachteil, dass sie aufgrund ihrer Bauart von Lastkraftwagenfahrern frühzeitig erkennbar sind und damit gemieden werden können. Sie sind ferner teuer in ihrer Herstellung und im Betrieb. Darüber hinaus behindern sie den Verkehrsfluss. Schließlich müssen sämtliche Lastkraftwagen die Wägestation anfahren, da einem Fahrzeug vorab nicht einfach angesehen werden kann, ob es ordnungsgemäß beladen oder überladen ist.

Unter anderem aus diesem Grund besteht Bedarf, das Gewicht eines Fahrzeuges zu ermitteln, während sich dieses in Fahrt befindet. Hierfür sind sogenannte WIM-Systeme (WIM = Weigh-In-Motion) bekannt, deren Wägesensorik einige Kilometer vor einer Wägestation fest in die Fahrbahn installiert von in Fahrt befindlichen Fahrzeugen überrollt werden, um eine Vorauswahl aus dem gesamten Verkehr zu treffen. Neben der Durchsetzung der Einhaltung von Gewichtslimiten sind die Datensammlung für Fahrbahnuntersuchungen, für den Straßenbau und für die Verkehrsüberwachung, auch im Hinblick auf eine gewichtsabhängige Straßenbenutzungsgebühr, typische Einsatzgebiete von WIM-Systemen.

Im Einzelnen ist bereits eine Vielzahl an derartigen Messeinrichtungen bekannt, deren Wägesensorik in den Straßenbelag eingebettet ist und die auf unterschiedlichen Messprinzipien beruhen. Die bei Überfahrt von einem Rad oder einer Achse des Fahrzeuges auf eine platten- oder streifenförmige Messfläche eingeprägte Last kann eine Biegung einer Platte mit bekannter Biegespannungscharakteristik, eine Druckbeaufschlagung eines Piezokristalls, eine Verschiebung des Plattenabstandes eines Plattenkondensators oder eine Verschiebung eines beweglichen Spulenkerns in einer Spule verursachen, wobei aus den genannten Wirkungen auf die Größe der Last zurückgeschlossen wird. Diese Messeinrichtungen kommen als Wägeplattformen oder Lastzellen oder als Kombination aus beiden zum Einsatz.

Aus der Patentschrift US 4,560,016 sind ein Verfahren und eine Vorrichtung zur Messung des Gewichtes eines in Fahrt befindlichen Fahrzeuges bekannt. Die Messvorrichtung weist eine Gummimatte auf, in die ein Lichtleiter eingebettet ist, entlang dessen eine Vielzahl an mikrobiegenden Befestigungen angeordnet ist. Die Kraft eines die Gummimatte überrollenden Fahrzeugrades quetscht eine Befestigung, wodurch an dieser Stelle des Lichtleiters ein Lichtverlust durch Ablenkung auftritt. Aus den Messungen des an einem Ende des Lichtleiters eingespeisten und des am anderen Ende austretenden Lichtes wird der durch die Lasteinwirkung bedingte Lichtverlust berechnet. Durch Kalibrierung können dann die einzelnen Rad- bzw. Achslasten und daraus die Gesamtlast des Fahrzeuges ermittelt werden.

Die Übersetzung DE 690 03 784 T2 einer europäischen Patentschrift offenbart eine Waage zum Wiegen sich bewegender Fahrzeuge. Sie umfasst eine an der Straßenbettung unterhalb des Bodenniveaus in dem Weg der sich bewegenden Fahrzeuge zu verankernde Basis und eine Plattform zum Aufnehmen der Räder der sich bewegenden Fahrzeuge. Zwischen der Basis und der Plattform sind Lastzelleneinrichtungen zum Abgeben von Signalen vorgesehen, die die von den Rädern auf die Plattform aufgebrachten Lasten anzeigen. Zwischen die Plattform und die Basis ist eine - vorzugsweise durch mindestens einen Biegearm oder eine Biegestrebe gebildete - Einrichtung gekoppelt, die eine Anfangslast oder Vorspannung dazwischen anlegt und eine Relativbewegung in Vertikalrichtung erlaubt, aber einer Relativbewegung in Horizontalrichtung widersteht.

Die bekannten Wägevorrichtungen leiden unter dem Nachteil, dass sie im Vergleich zu stationären Fahrzeugwaagen relativ ungenau sind. Insbesondere bestehen Probleme im Zusammenhang mit der Kalibrierung der Vorrichtungen, um statische Lasten aus der dynamischen Lastinformation zu gewinnen.

Der Erfindung liegt daher die Aufgabe zugrunde, ein Verfahren und eine Vorrichtung der eingangs genannten Art bereitzustellen, womit Lastbestimmungen von in Bewegung befindlichen Fahrzeugen mit einer höheren Genauigkeit durchgeführt werden können.

Der auf die Vorrichtung bezogene Aufgabenteil wird erfindungsgemäß gelöst durch ein gattungsgemäßes Verfahren zur Bestimmung einer Fahrzeuglast eines in Fahrt befindlichen Fahrzeugs, bei welchem die im kennzeichnenden Teil des Patentanspruches 1 angegebenen Schritte durchgeführt werden. Die Erfindung geht davon aus, dass während des Messens von Rad- und Achsgewichten von Fahrzeugen bei der Fahrt der Wägesensor mit verschiedenen dynamischen Effekten des Feder-Masse-Dämpfungssystems des Fahrzeuges und seiner Eigenwerte beaufschlagt wird. Der permanente Energieaustausch zwischen den Fahrzeugmassen, Federungselementen und Dämpfern mit der Straße, insbesondere bei unebenen Straßen und Unwuchten in Fahrzeugelementen, bewirkt eine dynamische Kraftkomponente, die sich einer statischen Fahrzeuglast überlagert. Es wird daher erfindungsgemäß ein Schwingungszustand des in Fahrt befindlichen Fahrzeuges zum Zeitpunkt der wenigstens einen Kraftmessung ermittelt. Aus dem Schwingungszustand wird dann ein schwingungsbedingter Kraftanteil der dynamischen gemessenen Kraft berechnet, woraus auf den statischen Kraftanteil der dynamisch gemessenen Kraft geschlossen werden kann. Daraus wird schließlich die zu bestimmende Fahrzeuglast, also Rad-, Achs- oder Gesamtlast des Fahrzeugs, ermittelt. Hierdurch kann eine Verbesserung der Messgenauigkeit von 10 bis 20% erreicht werden.

In einer vorteilhaften Ausführungsform des erfindungsgemäßen Verfahrens wird der Schwingungszustand durch Aufnahme einer digitalen Bilderserie des in Fahrt befindlichen Fahrzeugs ermittelt. Die Bildserie erlaubt eine zeitliche Beobachtung des durch seine Fahrt in Schwingung versetzten Fahrzeuges, um Amplituden und Schwingungsdauern der gegebenenfalls überlagerten Fahrzeugschwingungen zu ermitteln. Durch Bereitstellung dieser Bildinformationen in digitaler Form, kann auf rechnergestützte Auswertungsverfahren zurückgegriffen werden.

In einer besonderen Ausgestaltung des erfindungsgemäßen Verfahrens werden die aufgenommenen Bilder auf eine Schwingungsbewegung eines markanten Fahrzeugelementes ausgewertet. Aus der Trajektorie eines schwingenden Elementes des Fahrzeuges relativ zur Fahrbahn, auf der sich das Fahrzeug bewegt, kann auf die Schwingungsphase geschlossen werden, in der sich das Fahrzeug zum Zeitpunkt der Kraftmessung befindet. Zur Beobachtung einer Trajektorie wird ein markantes Fahrzeugelement, das sich vorzugsweise automatisch auf den Digitalbildern finden lässt, verfolgt.

Vorzugsweise wird als Fahrzeugelement ein markanter Punkt des Fahrzeugaufbaues verwendet. Ecken oder Kanten des Führerhauses oder Anhängers des Fahrzeuges, aber auch darauf angeordnete Schriftzeichen können gut mittels digitaler Bildauswertung erkannt und deren Position bestimmt werden.

Alternativ oder zusätzlich hierzu wird als Fahrzeugelement ein Mittelpunkt eines Fahrzeugrades verwendet. Ein Radmittelpunkt führt im Vergleich zum Fahrzeugaufbau eine weniger ausgeprägte Schwingungsbewegung bei der Fahrt aus und kann daher als Referenzpunkt für andere markante Elemente dienen.

In einer vorteilhaften Ausgestaltung des erfindungsgemäßen Verfahrens wird aus dem ermittelten Schwingungszustand und der dynamisch gemessenen Kraft anhand eines Schwingungsmodells des Fahrzeuges der statische Kraftanteil bestimmt. Schwingungsmodelle sind beispielsweise von den jeweiligen Herstellern von Lastkraftwagen bekannt. Aus dem beobachteten Schwingungsverhalten kann anhand eines dem gegebenen Fahrzeugtyp zugeordneten Schwingungsmodells auf den Schwingungszustand zu einem gegebenen Zeitpunkt geschlossen werden.

In einer anderen vorteilhaften Ausgestaltung des erfindungsgemäßen Verfahrens wird aus dem ermittelten Schwingungszustand und der dynamisch gemessenen Kraft anhand eines neuronalen Netzes der statische Kraftanteil bestimmt. Das neuronale Netz kann anhand von Zuordnungen bereits erfolgter Bildaufnahmen zu anschließend durchgeführten stationären, statischen Lastmessungen trainiert werden.

In einer bevorzugten Ausführungsform des erfindungsgemäßen Verfahrens wird die dynamische Kraftmessung in vorbestimmten Abständen wiederholt. Durch mehrfache Wägung mit Bildaufnahme kann das zugrundeliegende Schwingungsmodell oder neuronale Netz verifiziert werden, da im Allgemeinen jedes Mal ein anderer Schwingungszustand ermittelt wird. Hierdurch wird die Genauigkeit des Lastbestimmungsverfahrens verbessert.

In einer weiteren vorteilhaften Ausgestaltung des erfindungsgemäßen Verfahrens wird die Geschwindigkeit des Fahrzeugs zum Zeitpunkt der Kraftmessung gemessen und zur Berechnung des statischen Kraftanteils berücksichtigt. Der dynamische Bewegungszustand des Fahrzeuges, insbesondere die Größe der Schwingungsamplituden, hängt wesentlich von der Geschwindigkeit des Fahrzeuges ab. So ergibt die Berücksichtigung von Schwingungszustand und Fahrzeuggeschwindigkeit ein genaueres Resultat bei der Bestimmung des statischen Kraftanteils.

Vorzugsweise wird die Geschwindigkeit aus der aufgenommenen, digitalen Bildserie ermittelt. Aus der zeitlichen Größenveränderung einer markanten Länge oder Fläche des Fahrzeuges kann bei bekannter Blickrichtung eines Bildaufnahmegeräts relativ zum Fahrzeug auf dessen Geschwindigkeit geschlossen werden. Damit erübrigt sich der Kostenaufwand für eine gesonderte Geschwindigkeitssensorik. Alternativ kann die Fahrzeuggeschwindigkeit aber auch mittels einer Wiegesensorik und/oder eines Radardetektors und/oder eines Laserdetektors gemessen werden.

Der auf die Vorrichtung bezogene Aufgabenteil wird durch eine gattungsgemäße Vorrichtung mit den Merkmalen des kennzeichnenden Teils des Patentanspruches 10 gelöst.

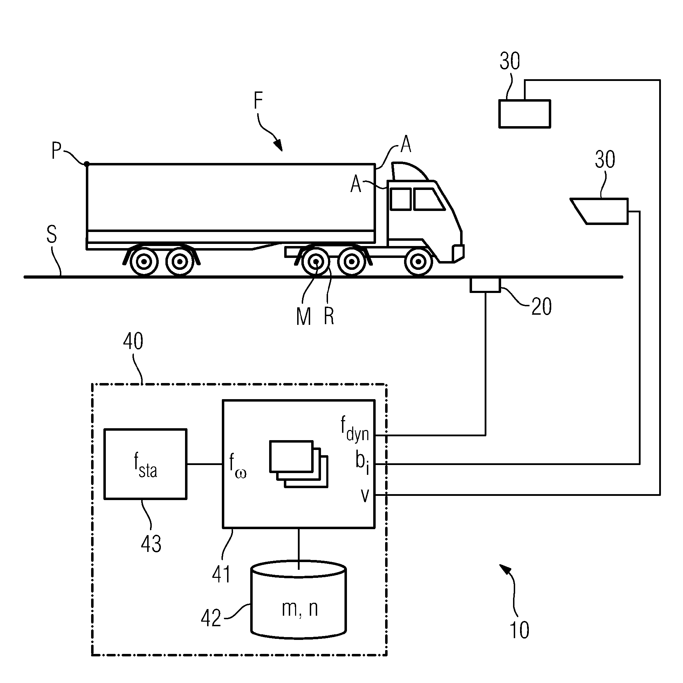

Eigenschaften und Vorteile der Vorrichtung und des Verfahrens gemäß der Erfindung ergeben sich aus einem Ausführungsbeispiel, welches im Nachfolgenden anhand der Zeichnung näher erläutert wird, in deren einziger Figur eine erfindungsgemäße Vorrichtung schematisch veranschaulicht ist.

Gemäß der Figur weist eine Vorrichtung 10 zur Bestimmung einer Fahrzeuglast eines in Fahrt befindlichen Fahrzeugs F eine Wiegesensorik 20 zur dynamischen Kraftmessung, eine Detektionseinrichtung zur Ermittlung eines Schwingungszustandes sowie eine Auswerteeinrichtung 40 zur Ermittlung einer statischen Fahrzeuglast aus dem ermittelten Schwingungszustand und der dynamisch gemessenen Kraft f_{dyn}.

Die Wiegesensorik 20 ist als in die Oberfläche der Fahrbahn S eingebetteter Wiegeplatten- oder Piezosensor ausgebildet, bei dessen Überfahrt durch das Fahrzeug F eine durch ein einzelnes Rad R oder eine Gruppe von Rädern einer Achse des Fahrzeugs F auf eine Messfläche der Wiegesensorik 20 ausgeübte Kraft f_{dyn} gemessen wird. Die dynamisch gemessene Kraft f_{dyn} weist einen statischen Kraftanteil fₛₜₐ, der auf das Eigengewicht und die Ladung des Fahrzeuges F zurückgeht, und einen schwingungsbedingten Kraftanteil f_{ω} auf, welcher auf die Fahrzeugschwingungen des in Fahrt befindlichen Fahrzeugs F zurückzuführen ist. Erfindungsgemäß wird nun der schwingungsbedingte Kraftanteil f_{ω} und daraus der statische Kraftanteil fₛₜₐ berechnet, um die jeweils gesuchte Fahrzeuglast zu ermitteln.

Hierzu weist die Detektionseinrichtung eine oder mehrere Videokameras 30 auf, die seitlich oder oberhalb der Fahrbahn S derart angeordnet ist bzw. sind, dass die Schwingungsbewegungen des Fahrzeuges F bei Überfahrt der Wiegesensorik 20 sowie davor und gegebenenfalls danach aufgenommen werden. Die Schwingungsbewegungen des Fahrzeuges F, beispielsweise eines Lastkraftwagens mit Zugmaschine und Auflieger, resultieren aus einer Überlagerung einer Vielzahl von verschiedenen Effekten. So tragen hochfrequente Schwingungen der Reifenoberfläche, Unwuchten in Reifen, Rad und Antriebsstrang, Schwingungen in der Achsgruppe, Wank-, Nick-, Gier- und Hubbewegungen des gesamten Fahrzeuges bzw. der Fahrzeugteile, Schwankungen der Ladungen und Seitenwindeffekte, jeweils gekoppelt über den Energieaustausch mit im Federungssystem gespeicherte Energie, bei. Beeinflusst wird dies durch die Qualität der Oberfläche und der Stabilität des Unterbaues der Fahrbahn S, der Beschaffenheit der Messstelle - also der Ebenheit des An- und Abfahrbereiches sowie die horizontale und vertikale Neigung der Fahrbahn S - dem Fahrverhalten des Fahrzeugführers - also Bremsen, Beschleunigen, Lenkbewegungen - und dem Zustand des Fahrzeuges, etwa Federungs- und Dämpfungssystem, Rad- und Reifenunbalancen und Art des Ladeguts.

Die Detektionseinrichtung weist zusätzlich einen Radardetektor 31 auf, mittels dessen die Geschwindigkeit v des Fahrzeugs F an der Kraftmessstelle gemessen wird. Des Weiteren können ein nicht dargestellter Laserdetektor sowie ein ebenfalls nicht dargestellter Ultraschalldetektor an der Messstelle angeordnet sein, die zur zeitlichen Abstandsmessung zum oder am Fahrzeug F dienen.

Die Detektionseinrichtungen 30, 31 übertragen ihre Daten an die Auswerteeinrichtung 40, die eine Recheneinheit 41, eine Speichereinheit 42 sowie eine Ausgabeeinheit 43 umfasst. Die von der Videokamera 30 übertragenen Bilddaten bᵢ werden anhand eines an sich bekannten Schwingungsmodells m und/oder eines neuronalen Netzes n, welche in der Speichereinheit 42 hinterlegt sind, ausgewertet. Auf der Bildserie bᵢ wird ein markantes Fahrzeugelement, beispielsweise ein markanter Punkt P des Fahrzeugaufbaus A und/oder ein Mittelpunkt M eines Fahrzeugrades R, verfolgt und aus der Schwingungsbewegung der Schwingungszustand des Fahrzeuges F zum Zeitpunkt der Kraftmessung ermittelt. Je nach Schwingungsmodell m oder neuronalem Netz n werden hierzu auch die gemessene Fahrzeuggeschwindigkeit v sowie weitere Abstandsmesswerte berücksichtigt. Aus der dynamisch gemessenen Kraft f_{dyn} und dem ermittelten Schwingungszustand kann nun der schwingungsbedingte Kraftanteil f_{ω} durch die Recheneinheit 41 ermittelt werden. Mit dem schwingungsbedingten Kraftanteil f_{ω} steht aber auch der statische Kraftanteil fₛₜₐ der dynamisch gemessenen Kraft f_{dyn} und damit die zu bestimmende Rad- oder Achslast fest. Daraus lässt sich aber auch die Gesamtlast des Fahrzeuges F ermitteln und auf den als Bildschirm ausgebildeten Ausgabeeinheit 43 der Auswerteinrichtung 40 für ein Überwachungspersonal darstellen.

Insgesamt ermöglicht das erfindungsgemäße Verfahren bzw. die Vorrichtung zur Durchführung des Verfahrens eine genauere Bestimmung von Fahrzeuggewichten bzw. Achslasten, als es die bisherige alleinstehende Messung der auf die Fahrbahn S ausgeübten Kraft leisten kann. Es erschließen sich hiermit neue Anwendungen, die ein erhöhtes Maß an Messgenauigkeit erfordern, wie beispielsweise die vollautomatische Ahndung von Überladungen oder die automatische, gesicherte Erfassung der tatsächlichen Fahrzeuggewichte für ein gewichtsbasiertes Mauterhebungsverfahren. Ferner kann durch den Einsatz zusätzlicher Sensorik unter Umständen auf den aufwendigen und kostspieligen Einbau vieler Wägesensoren in die Fahrbahnoberfläche verzichtet werden, wodurch neben der erhöhten Messgenauigkeit auch ein Kostenvorteil bei Installation und Wartung eines erfindungsgemäßen Systems erzielt werden.

## Patentansprüche

1. Verfahren zur Bestimmung einer Fahrzeuglast eines in Fahrt befindlichen Fahrzeugs (F), insbesondere einer Rad-, Achs- und/oder Gesamtlast des Fahrzeuges (F), wobei eine von wenigstens einem Rad (R) des fahrenden Fahrzeugs (F) auf die Fahrbahn (S) ausgeübte Kraft (f_{dyn}) gemessen wird, und wobei aus der wenigstens einen dynamisch gemessenen Kraft (f_{dyn}) eine statische Fahrzeuglast ermittelt wird,
**dadurch gekennzeichnet, dass** ein Schwingungszustand des in Fahrt befindlichen Fahrzeuges (F) zum Zeitpunkt der wenigstens einen Kraftmessung ermittelt wird, dass aus dem Schwingungszustand ein schwingungsbedingter Kraftanteil (f_{ω}) der dynamischen gemessenen Kraft (f_{dyn}) berechnet wird, dass aus der dynamisch gemessenen Kraft (f_{dyn}) und dem schwingungsbedingten Kraftanteil (f_{ω}) ein statischer Kraftanteil (fₛₜₐ) der dynamisch gemessenen Kraft (f_{dyn}) berechnet wird, und dass aus dem wenigstens einen statischen Kraftanteil (fₛₜₐ) die Fahrzeuglast ermittelt wird.

2. Verfahren nach Anspruch 1,
wobei der Schwingungszustand durch Aufnahme einer digitalen Bilderserie (bᵢ) des in Fahrt befindlichen Fahrzeugs (F) ermittelt wird.

3. Verfahren nach Anspruch 2,
wobei die aufgenommenen Bilder (bᵢ) auf eine Schwingungsbewegung eines markanten Fahrzeugelementes ausgewertet werden.

4. Verfahren nach Anspruch 3,
wobei als Fahrzeugelement ein markanter Punkt (P) des Fahrzeugaufbaus (A) verwendet wird.

5. Verfahren nach Anspruch 3,
wobei als Fahrzeugelement ein Mittelpunkt (M) eines Fahrzeugrades (R) verwendet wird.

6. Verfahren nach einem der Ansprüche 1 bis 5,
wobei aus dem ermittelten Schwingungszustand und der dynamisch gemessenen Kraft (f_{dyn}) anhand eines Schwingungsmodells (m) des Fahrzeuges (F) der statische Kraftanteil (fₛₜₐ) bestimmt wird.

7. Verfahren nach einem der Ansprüche 1 bis 6,
wobei aus dem ermittelten Schwingungszustand und der dynamisch gemessenen Kraft (f_{dyn}) anhand eines neuronalen Netzes (n) der statische Kraftanteil (fₛₜₐ) bestimmt wird.

8. Verfahren nach einem der Ansprüche 1 bis 7,
wobei die dynamische Kraftmessung in vorbestimmten Abständen wiederholt wird.

9. Verfahren nach einem der Ansprüche 1 bis 8,
wobei die Geschwindigkeit (v) des Fahrzeugs (F) zum Zeitpunkt der Kraftmessung gemessen und zur Berechnung des statischen Kraftanteils (fₛₜₐ) berücksichtigt wird.

10. Verfahren nach Anspruch 9,
wobei die Geschwindigkeit (v) aus der aufgenommenen, digitalen Bildserie (bᵢ) ermittelt wird.

11. Vorrichtung (10) zur Durchführung eines Verfahrens nach einem der Ansprüche 1 bis 10, mit einer Wiegesensorik (20) zur dynamischen Messung der von dem fahrenden Fahrzeug (F) auf die Fahrbahn (S) ausgeübten Kraft (f_{dyn}) und mit einer Auswerteeinrichtung (40) zur Ermittlung einer statischen Fahrzeuglast aus der dynamisch gemessenen Kraft (f_{dyn}),
**gekennzeichnet, durch** eine Detektionseinrichtung (30, 31) zur Ermittlung eines Schwingungszustandes des in Fahrt befindlichen Fahrzeuges (F) zum Zeitpunkt der wenigstens einen Kraftmessung, wobei die Auswerteeinrichtung (40) derart ausgebildet ist, dass aus dem ermittelten Schwingungszustand ein schwingungsbedingter Kraftanteil (f_{ω}) der dynamischen gemessenen Kraft (f_{dyn}) berechenbar, dass aus der dynamisch gemessenen Kraft (f_{dyn}) und dem schwingungsbedingten Kraftanteil (f_{ω}) ein statischer Kraftanteil (fₛₜₐ) der dynamisch gemessenen Kraft (f_{dyn}) berechenbar, und dass aus dem wenigstens einen statischen Kraftanteil (fₛₜₐ) die Fahrzeuglast ermittelbar ist.

12. Vorrichtung (10) nach Anspruch 11,
wobei die Detektionseinrichtung einer Videokamera (30) zur Aufnahme einer digitalen Bilderserie (bᵢ) des in Fahrt befindlichen Fahrzeuges (F) aufweist.
